# EUROPEAN PATENT APPLICATION

(11) **EP 4 742 136 A1**
(43) Date of publication of application: **13.05.2026**
(21) Application number: 25214714.5
(22) Date of filing: 10.11.2025
(51) Int. Cl.: G06Q 30/0645

(54) **METHOD AND SYSTEM FOR SUBSCRIPTION TO INTERNET-BASED MULTI-USER MEMBERSHIPS FOR THE USE OF ONE OR MORE HOUSEHOLD APPLIANCES, BY MEANS OF A SOFTWARE APPLICATION EXECUTABLE ON A USER'S MOBILE DEVICE AND INTERACTIONS WITH REMOTE SERVERS**

(30) Priority: 11.11.2024 IT 202400025248
(71) Applicant: Candy S.p.A., 20861 Brugherio, Monza e Brianza (IT)
(72) Inventor: FERRISE, Andrea, I-20861 Brugherio, MONZA E BRIANZA (IT); DEL BELLO, Francesco, I-20861 Brugherio, MONZA E BRIANZA (IT)
(74) Representative: Brunazzi, Stefano

(57) **Abstract**

A method is described for subscribing to Internet-based multi-user memberships for the use of one or more household appliances, through a software application running on a user's mobile device and interactions with remote servers. The method comprises the following steps:
(i) associating a plurality of users with a membership and/or subscription and with the related use of at least one household appliance associated with the membership and/or subscription;
(ii) providing a software application (APP), stored in and executable by a user's mobile device, configured to allow the registration of one or more household appliances, also through the association with at least one user of the plurality of users, and further configured to allow providing information to said remote servers regarding one or more memberships and/or subscriptions and the users related to said one or more memberships and/or subscriptions;
(iii) setting and managing a hierarchy of users, among the users belonging to said plurality of users, wherein said hierarchy of users comprises at least one "main user", who is the user, among said plurality of users, who activates the multi-user membership and/or subscription and provides for the related payments, and one or more further "associated users" enabled to use one or more household appliances, according to constraints defined by the main user, based on the membership of the main user, and upon registration by the main user.

A system capable of implementing said method is also described.

## Description

### TECHNOLOGICAL BACKGROUND OF THE INVENTION

### Field of application.

The present invention relates to the general technical field of subscription to memberships by means of digital tools, Internet-based, for the use of one or more products or services.

In particular, the invention refers to a method, and to a related system, for subscribing to Internet-based multi-user memberships for the use of one or more household appliances, through a software application executable on a user's mobile device and interactions with remote servers.

### Description of the prior art.

In the above-mentioned technical field, within the context of the growing digitalisation of the use of services of all types, solutions for subscribing to memberships for the use and/or access to products and services through the use of APPs and via the Internet are rapidly spreading.

In particular, such solutions are also emerging in the field of household appliances, to allow payment proportional to the actual use of a household appliance, exploiting the now widespread availability of APPs for mobile devices with functions for managing the use of household appliances.

In this regard, solutions are known that allow associating a user with a membership for the use of a specific household appliance.

Such solutions have the drawback of a certain lack of flexibility, and there is a need for more flexible solutions allowing effective subscription and management of multi-appliance and multi-user memberships (which are very useful, for example, for different family members or for a plurality of co-tenants).

This need, strongly felt in the considered technical field, is not fully met by known and/or commercially available solutions.

### SUMMARY OF THE INVENTION.

It is an object of the present invention to provide a method for subscribing to Internet-based multi-user memberships for the use of one or more household appliances, which allows to at least partially overcome the drawbacks mentioned above with reference to the prior art, and to respond to the aforementioned needs particularly felt in the considered technical field.

This object is achieved by a method for subscribing to Internet-based multi-user memberships for the use of one or more household appliances, through a software application running on a user's mobile device and through interactions with remote servers, in accordance with claim 1.

Further embodiments of such method are defined in claims 2-12.

It is also an object of the present invention to provide a system for subscribing to Internet-based multi-user memberships for the use of one or more household appliances, capable of implementing the aforementioned method.

This object is achieved by a system in accordance with claim 13.

Further embodiments of the system are defined in claims 14 and 15.

### BRIEF DESCRIPTION OF THE DRAWINGS.

Further features and advantages of the method and system for subscribing to multi-user memberships, according to the invention, will emerge from the following description of preferred embodiments, given by way of example and not limitation, with reference to the accompanying figure:
- Figure 1 illustrates a simplified block diagram of an architecture of a system (and related method) for subscribing to multi-user memberships, according to an embodiment of the present invention;
- Figure 2 illustrates an example of interaction between groups of software modules (software platforms, software applications) employed in an embodiment of the method according to the present invention.

### DETAILED DESCRIPTION.

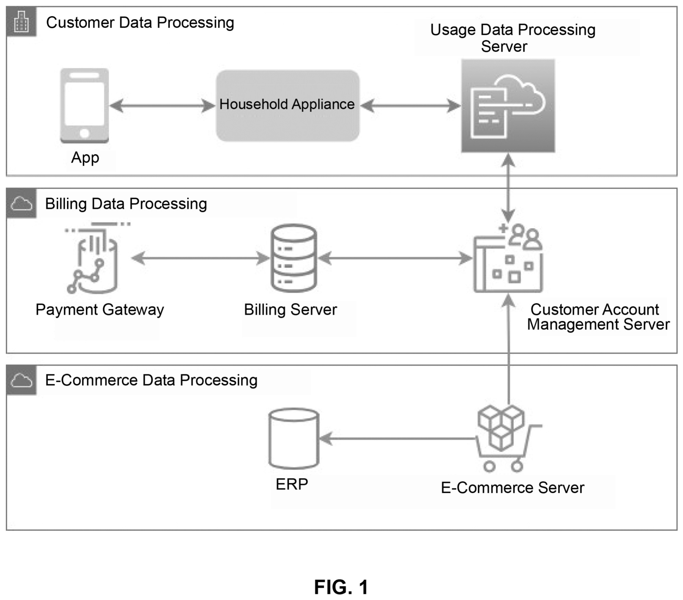

Described in more detail below, with reference to figures 1-2, is a method for subscribing to Internet-based multi-user memberships for the use of one or more household appliances, through a software application running on a user's mobile device and interactions with remote servers.

The method comprises the following steps:
(i) associating a plurality of users with a membership and/or subscription and with the related use of at least one household appliance associated with the membership and/or subscription;
(ii) providing a software application (APP), stored in and executable by a user's mobile device, configured to allow the registration of one or more household appliances, also through the association with at least one user of said plurality of users; the software application (APP) is further configured to allow providing information to said remote servers regarding one or more memberships and/or subscriptions and the users related to said one or more memberships and/or subscriptions;
(iii) setting and managing a hierarchy of users among the users belonging to said plurality of users.

Said hierarchy of users comprises at least one "main user" and one or more additional "associated users".

The at least one "main user" (who can also be referred to as owner user, or payer) is the user, among said plurality of users, who activates the multi-user membership and/or subscription and provides for the related payments.

The one or more additional "associated users" are additional users enabled to use one or more household appliances, according to constraints defined by the main user, based on the membership of the main user, and upon registration by the main user.

According to an embodiment, the method comprises the further step of associating a plurality of household appliances with a subscribed user, by means of a plurality of respective registration actions (also definable as "enrolment" actions, according to commonly used English terminology) and a plurality of respective subscription plans, so as to obtain a membership and/or subscription for both multi-user and multi-appliance use.

In accordance with an implementation option of the aforementioned embodiment, each of said subscription plans is characterised by a respective pair of pieces of information, including "household appliance type" information and "subscription type" information.

According to various possible embodiments of the method, said remote servers consist of and/or comprise an "e-commerce server", and/or a "customer account management server" and/or a "billing server" configured to interoperate and interact also with said software application (APP).

In other words, the group of remote servers employed in the method may consist of, or comprise, any combination of said functional servers.

According to an implementation option of the method, the remote servers consist of and/or comprise all said functional servers, i.e., the remote servers consist of and/or comprise both an "e-commerce server", and a "customer account management server" and a "billing server".

In accordance with an implementation option, said "customer account management server" is a CRM (Customer Relationship Management) server, known per se.

According to an implementation option, said "billing server" comprises a billing platform with billing engine, known per se.

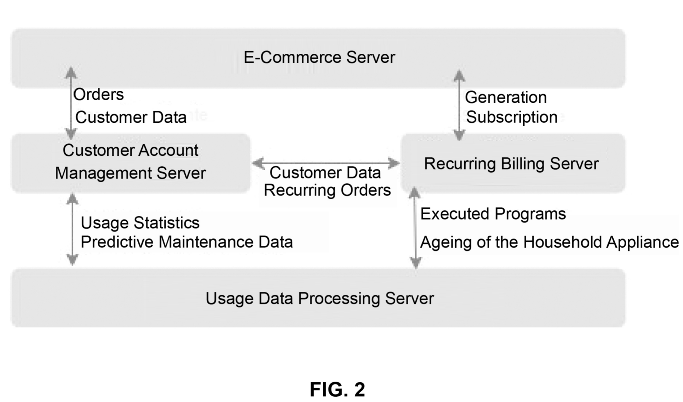

According to an implementation option, said "billing server" is a "recurring billing server" (as shown, for example, in figure 2).

In accordance with one embodiment of the method, the aforementioned software application (APP), running on a user's mobile device, is provided by the manufacturer of the household appliance.

In accordance with one embodiment, the method further provides to make available a platform, accessible via the Internet, which acts as a gateway for all the membership services and is configured to interact with the software application (APP). Said platform provides the user with a single interface for the entire membership service.

According to an implementation option of the aforementioned embodiment, said platform accessible via the Internet directly provides "e-commerce server" functions and interoperates with other servers to provide, in a transparent manner for the user, the aforesaid customer account management and billing functions, which are involved in the "multi-user membership".

According to a particular implementation option, the aforementioned platform accessible via the Internet is provided by the manufacturer of the household appliance.

In accordance with one embodiment of the method, the information provided by the software application (APP) to the remote servers includes initial information.

According to various possible implementation options, such initial information comprises, for example, email address of the main user and/or email addresses of the associated users and/or identifiers (IDs) of the household appliances for which the membership is subscribed, and/or list of allowed users for each household appliance, and/or type of subscription for each user.

In accordance with one embodiment of the method, the information provided by the software application (APP) to the remote servers includes periodic information regarding the use of a specific household appliance by a given user, for example, for billing purposes.

According to one embodiment, the method further comprises the step of allowing the use, by each user, of a household appliance for which the specific user is enabled by accessing the relevant membership through the software application (APP), upon carrying out a remote check to verify whether the user has the right to use the appliance, before enabling its use.

According to an implementation option of the aforementioned embodiment, the step of accessing the relevant membership and/or subscription through the software application (APP) comprises logging in by the user, using his/her own identifier (ID), for example his/her email address, as initially registered.

According to various possible embodiments, the method applies to the subscription of a usage membership for any household appliance (for example, washing machine, dishwasher, dryer, oven, and so on).

In accordance with a preferred embodiment, the method applies to the subscription of a usage membership for a washing machine or dryer.

Hereinafter, still with reference to figures 1-2, a system for subscribing to Internet-based multi-user memberships for the use of one or more household appliances is described.

Said system comprises a user's mobile device, in which a software application (APP) is stored and executable. Said software application (APP) is configured to allow the registration of one or more household appliances, also through association with at least one user equipped with said user's mobile device.

The system further comprises electronic processing means, remote from the at least one household appliance and from the user's mobile device, operatively and communicatively connected to the user's mobile device. Said electronic processing means are configured to perform the following actions:
(i) associating a plurality of users with a membership and/or subscription and with the related use of at least one household appliance associated with the membership and/or subscription;
(iii) setting and managing a hierarchy of users, among the users belonging to said plurality of users; said hierarchy of users comprises at least one "main user" and one or more additional "associated users".

The main user (also definable as owner user, or payer user) is the user, among the plurality of users, who activates the multi-user membership and/or subscription and provides for the related payments.

Each of the at least one additional associated user is a user enabled to use one or more household appliances, according to constraints defined by the main user, based on the membership of the main user, and upon registration by the main user.

In the context of the system, the aforementioned software application (APP) is further configured to allow providing information to said remote servers regarding one or more memberships and/or subscriptions and the users related to said one or more memberships and/or subscriptions.

According to an embodiment of the system, said electronic processing means comprise one or more remote servers.

According to various possible implementation options of said embodiment, said one or more remote servers consist of and/or comprise an "e-commerce server", and/or a "customer account management server" (for example, CRM server) and/or a "billing server" configured to interoperate and interact also with the software application (APP).

According to an implementation option of the system, the "customer account management server" is a CRM server, known per se.

According to an implementation option of the system, the "billing server" comprises a billing platform with billing engine.

According to an implementation option, the aforementioned "billing server" is a "recurring billing server" (as shown, for example, in figure 2).

In accordance with an embodiment, the system further comprises a platform, accessible via the Internet, which acts as a gateway for all the membership services and is configured to interact with the software application (APP).

According to an implementation option, said platform accessible via the Internet provides the user with a single interface for the entire membership service.

According to another implementation option, said platform accessible via the Internet directly provides "e-commerce server" functions and interoperates with other servers to provide, in a transparent manner for the user, the aforesaid customer account management and billing functions, which are involved in the "multi-user membership".

In an implementation option, said platform accessible via the Internet comprises a "usage data processing server".

According to other specific implementation examples, the system for subscribing to Internet-based multi-user memberships for the use of one or more household appliances is configured to perform a method for subscribing to Internet-based multi-user memberships for the use of one or more household appliances according to any of the embodiments and implementation examples of the method itself, already previously described.

According to one embodiment of the system, said user's mobile device is a smartphone.

According to various possible embodiments of the system, said electronic processing means comprise computers or other electronic processors or processing units, known per se.

In particular, according to various possible implementation options, said servers comprise servers implemented through computers or workstations, and are remotely connected and inter-operating among themselves based on any telecommunication technology and communication protocols known per se.

According to various possible embodiments of the system, said software modules or programs are implemented through architectures and functional partitions known per se.

With further reference to Figures 1 and 2, detailed descriptions of specific embodiments of the method and system according to the invention are provided below, by way of example and not limitation.

In Figure 1, the set of functions performed by the method is schematised into three functional levels: "Customer Data Processing", "Billing Data Processing", "E-commerce Data Processing", for each of which the main components of the system according to the invention that are involved are indicated.

At the "Customer Data Processing" level, the "APP", the "Household Appliance", and a "Usage Data Processing Server" are involved.

In one implementation option, said "Usage Data Processing Server" also supports the functions of the platform accessible via the Internet which provides the user with a single interface for the entire membership service, as already previously mentioned.

At the "Billing Data Processing" level, the "Customer Account Management Server" is involved first, which is operatively connected with the "Billing Server", which in turn is operatively connected with a "Payment Gateway".

The "Customer Account Management Server" also provides connection and interoperability functions with the other levels, being operatively connected both to the "Usage Data Processing Server" of the "Customer Data Processing" level and to an "E-commerce Server" of the "E-commerce Data Processing" level.

The "E-commerce Data Processing" level comprises in turn, in this example, the aforementioned "E-commerce Server" and an ERP server.

Figure 2 illustrates the functional relationships and the exchanges of information between the various servers involved, according to an embodiment of the invention.

In the example of figure 2, the information exchanged between the servers includes:
- information relating to orders and customer data, between the "E-commerce Server" and the "Customer Account Management Server";
- information relating to generation and subscription between the "E-commerce Server" and the "Recurring Billing Server";
- information relating to customer data and recurring orders between the "Customer Account Management Server" and the "Recurring Billing Server";
- information relating to usage statistics and predictive maintenance data, between the "Customer Account Management Server" and the "Usage Data Processing Server";
- information relating to executed programs and ageing of the household appliance between the "Usage Data Processing Server" and the "Recurring Billing Server".

According to a specific embodiment of the method and the system, the user interface provided by the platform is a user interface page of a website, for example the website of the manufacturer of the household appliance, which constitutes the entry point for activating the multi-user subscription and for carrying out the steps of the method.

The aforementioned software platform, accessible via the Internet, which acts as a gateway for the entire membership services, comprises one or more software programs or modules capable of managing the user interface, collecting the information provided by the user, and interoperating (that is, acting as a "mediator") with the aforementioned "e-commerce server", "customer account management server" and "billing server", establishing an interaction between the servers such as to carry out all the steps provided in the method.

As already mentioned, the aforementioned "e-commerce server", "customer account management server" and "billing server" may be commercially available platforms, known per se, whose features are taken into account by the software platform for managing the method in order to be able to implement the method.

According to an implementation option, the "e-commerce server" may be an e-commerce platform, known per se, for the creation and management of orders.

According to an implementation option, the "customer account management server" may be a CRM platform, known per se, for the management of assets and customers.

According to an implementation option, the "billing server" (also definable as "subscription platform") may be a "recurrent billing management" platform, known per se.

The possibility offered by the present method to interact with servers known per se, for example with existing HW/SW platforms, but appropriately and specifically configured to cooperate with one another, as illustrated in the present description, to provide the functional performances described in detail above, constitutes a further advantage provided by the present invention.

Through the aforementioned user interface accessible via the Internet, the user can access a page dedicated to the purchased household appliance, in which he/she can select a subscription plan, add it to the cart, and proceed with the order.

Also through the aforementioned interface, the user registers using his/her email address and a password. In this example, the email address is the information that characterises the customer.

The user, in this case the main user (according to the aforementioned user hierarchy), then provides initial information regarding the type of household appliance for which the usage subscription is made and the type of subscription (or "subscription plan"), among various predefined and selectable subscription plans.

Once the above operations have been completed, that is, once the order has been placed, the e-commerce server carries out the actions of creating a customer account on the CRM platform and creating a respective related account on the billing platform.

The creation of an account on the CRM platform provides for the supply of a series of information characterising the customer (in this case, the main user), including, for example:
- "BillingAddress" using a variable with the following information *("city": null, "country": IT, "geocodeAccuracy": null, "latitude": null, "longitude": null, "postalCode": null, "state": null, "street": null*);
- a "BillingCountry" string populated for example with the indication "IT";
- a "First Name" string containing the name of the customer/subscriber;
- a "FormulaEmail" string containing the email address of the customer/subscriber;
- a "FormulaMobile" string containing the mobile phone number of the customer/ subscriber, that is of said user's mobile device;
- an account identifier (Account ID) containing an auto-generated field that stores a unique key for the identity of the customer/subscriber within the CRM platform;
- an "Asset", that is, a virtual digital object with a partial serial number.

The consequent creation of a respective related account on the billing platform is carried out by providing the billing platform, for example, with the following information:
- Name" - name of the customer
- "Bill To" - name of the main customer (payer) with whom the customer is associated and to whom the invoice is to be issued;
- "CRM Account ID" -> account identifier, provided by the CRM platform;
- "Payment Method" -> information intended to be used by the payment gateway for recurring billing.

Once a new order has been created, through the steps described above, the subscription is in a "pending activation" state.

At this point, when the customer receives the household appliance, a registration ("enrolment") procedure is carried out through the software application stored and executable on the user's/customer's mobile device.

After the registration of the household appliance has been completed, the subscription is activated, and the order is in the "active" state.

The subscription is associated with a billing account, responsible for paying for the service, and is also associated at least with the main user who subscribed to the service and registered the household appliance.

The relationship is ensured, in this case, by the fact that the user is required to use the same email address for the e-commerce platform and for the "enrolment" APP. For example, for the registration, the user can scan a QR Code present on the household appliance, and on that basis the APP is configured to create a new digital object "Asset" in the CRM platform, associated with the user's account.

In the method according to the present invention, as already illustrated several times, it is envisaged that a customer (main user) may have a plurality of usage subscriptions associated with his/her own account.

Moreover, in the method according to the present invention, as already illustrated several times, it is envisaged the possibility of defining a hierarchy of users (main user, additional associated users) within the subscription.

The definition of a user hierarchy, and the methods that make it possible to implement it (further detailed below), are particularly advantageous, as they allow to flexibly, effectively and securely articulate a single subscription, obtaining a multi-user subscription. Such a multi-user subscription, just by virtue of the hierarchy implemented within it, allows on the one hand to maintain a reference main user, for example the payer user, who also defines the credentials and usage constraints of each of said associated users, who can then use the household appliance, using their own credentials, within the limits of their predefined usage constraints.

The advantages offered by such a solution are evident, for example in the use case of users of a single family, or in any case co-tenants of a single household. Thanks to the "hierarchy" of users made possible by the solution of the present patent application, it is possible to perform a single subscription for the use of one or more household appliances of the same family and/or household, instead of a plurality of subscriptions associated with individual users, while still maintaining a main reference user (payer and responsible for the subscription) and enabling personalised usage by all the other users, depending on the predefined constraints, in a simple and transparent way for the user and traceable for the service provider.

To this end, according to an implementation option, the main user, via the aforementioned user interface accessible via the Internet, adds a plurality of emails of users associated with him/her, and information on the household appliance(s) accessible by each associated user and/or on the type or usage constraint of that particular associated user.

Each associated user can then log in with his/her email (as registered by the main user), and the APP executable on the user's device automatically associates said new "associated user" with the existing subscription.

According to an embodiment of the method, this is done by providing two keys, namely two digital objects "account" and "order", wherein an "order" is associated with only one "account" and multiple "orders" may be associated with the same "account". The account is then associated with the subscription, and the "orders" of the account correspond to the different users associated with the same subscription, thus obtaining a multi-user subscription.

On the other hand, the subscription may be "multi-household appliance", that is, a subscription may allow the use of multiple household appliances.

This is done by making available on the web page of the user interface a plurality of rows, associated with respective household appliances, selectable by the main user when creating the order, and repeating the enrolment procedure, as described above, for each of the household appliances.

In such case, the CRM server is configured to associate one account with multiple household appliances, with respective subscription plans (i.e. rate plans).

By combining the procedures described above, the preferred embodiment of the method is obtained, that is a multi-user and multi-household appliance subscription.

With reference to the aforementioned "subscription plans", it should be noted that each of them, according to an implementation option, comprises a pair of information: "household appliance type" and "subscription type".

According to a possible implementation example, a "subscription type" is characterised by three components:
- a one-time contribution (at the time of contract signing);
- a recurring part (e.g., "flat fee") for a certain period of time (e.g., 30 days) starting from service activation;
- a usage-dependent contribution, which may be null below a certain usage threshold (e.g., number of washes) and with an additional rate amount for each use (e.g., wash) beyond the threshold.

In such a case, to enable the usage-dependent contribution, the APP of the mobile device is configured to send usage data to the billing server.

According to an embodiment of the method and system, the use of the household appliance is mainly governed by the status of the subscription.

In the case where the subscription is active, all the characteristics and operating modes illustrated above apply.

In the case where the subscription is not active, or is no longer active, for any reason, two implementation options are possible:
- either the household appliance simply enters a locked state, in which it is no longer usable until the subscription is restored,
- or a usage concept is applied that is operationally comparable to an "electronic token-operated mechanism", in which (outside the subscription) the payment of a certain amount is required for a certain level of use, and in which the use allowed by such payment is consumed by operating the household appliance or through its remote control.

As can be seen, the object of the present invention is achieved by the system and the method described above.

Indeed, based on the above and for the reasons illustrated previously in detail, it is evident that the method and the system according to the invention make available flexible and effective solutions for the implementation and management of multi-user subscription memberships for the use of one or more household appliances, also providing for a hierarchy among the users of the subscription.

To the embodiments of the method and system for subscribing to Internet-based multi-user memberships for the use of one or more household appliances according to the invention, as described above, a person skilled in the art, in order to meet contingent requirements, may make modifications, adaptations, and replacements of elements with others that are functionally equivalent, also in conjunction with the prior art, also creating hybrid implementations, without departing from the scope of the following claims. Each of the features described as pertaining to a possible embodiment may be implemented independently of the other described embodiments.

It is further noted that the term "comprising" does not exclude other elements or steps, the term "a" or "an" does not exclude a plurality.

## Claims

1. A method for subscribing to Internet-based multi-user memberships for the use of one or more household appliances, by means of a software application (APP) running on a user's mobile device and through interactions with remote servers, wherein the method comprises:
(i) associating a plurality of users with a membership and/or subscription and with the related use of at least one household appliance associated with the membership and/or subscription;
(ii) providing a software application (APP), stored in and executable by a user's mobile device, configured to allow the registration of one or more household appliances, also through the association with at least one user of said plurality of users, and further configured to allow providing information to said remote servers regarding one or more memberships and/or subscriptions and regarding the users related to said one or more memberships and/or subscriptions;
(iii) setting and managing a hierarchy of users, among the users belonging to said plurality of users, said hierarchy of users comprising at least:
- one "main user", who is the user, among said plurality of users, who activates the multi-user membership and/or subscription and provides for the related payments, and
- one or more further "associated users" enabled to use one or more household appliances, according to constraints defined by the main user, based on the membership of the main user, and upon registration by the main user.

2. A method according to claim 1, comprising the further step of associating a plurality of household appliances with a subscribed user, by means of a plurality of respective registration actions, and a plurality of respective subscription plans, so as to obtain a membership and/or subscription for a multi-user and multi-household appliance use.

3. A method according to claim 2, wherein each of said subscription plans is **characterized by** a respective pair of "household appliance type" information and "subscription type" information.

4. A method according to any one of the preceding claims, wherein said remote servers consist of and/or comprise an "e-commerce server", and/or a "customer account management server" and/or a "billing server" configured to interoperate and interact also with the aforesaid software application (APP).

5. A method according to claim 4, wherein said remote servers consist of and/or comprise both said "e-commerce server", and said "customer account management server" and said "billing server".

6. A method according to any one of the preceding claims, wherein said software application (APP), running on a user's mobile device, is provided by the manufacturer of the household appliance.

7. A method according to any one of the preceding claims, further comprising:
- providing a platform, accessible via the Internet, which acts as a gateway for all membership services and is configured to interact with the software application (APP), wherein said platform provides the user with a single interface for the entire membership service.

8. A method according to claim 7, wherein said platform accessible via the Internet directly provides "e-commerce server" functions and interoperates with other servers to provide, in a transparent manner for the user, the aforesaid customer account management and billing functions, which are involved in the "multi-user membership".

9. A method according to any one of the preceding claims, wherein the information provided by the software application (APP) to the remote servers comprise:
- initial information, comprising, for example, email address of the main user and/or email addresses of the associated users and/or identifiers (IDs) of the household appliances for which the membership is obtained, and/or list of allowed users for each household appliance, and/or type of subscription for each user;
and/or
- periodic information on the use of a specific household appliance by a particular user, for example, for billing purposes.

10. A method according to any one of the preceding claims, further comprising the step of:
- allowing the use, by each user, of a household appliance for which the specific user is enabled by accessing the relevant membership by means of the software application (APP), upon carrying out a remote control to verify if the user has the right to use the appliance, before enabling the use thereof.

11. A method according to claim 10, wherein said step of accessing the relevant membership and/or subscription by means of the software application (APP) comprises logging in by the user, using his/her identifier (ID) as initially registered.

12. A method according to claim 4 and claim 7, wherein said "billing server" is a "recurring billing server", said platform accessible via the Internet that provides the user with a single interface for the entire membership service comprises a "usage data processing server", and wherein:
- the "e-commerce server" and the "customer account management server" are configured to exchange information about orders and customer data;
- the "e-commerce server" and the "recurring billing server" are configured to exchange information on generation and subscription;
- the "customer account management server" and the "recurring billing server" are configured to exchange information on customer data and recurring orders;
- the "customer account management server" and the "usage data processing server" are configured to exchange information on usage statistics and predictive maintenance data;
- the "usage data processing server" and the "recurring billing server" are configured to exchange information on executed programs and ageing of the household appliance.

13. A system for subscribing to Internet-based multi-user memberships for the use of one or more household appliances, comprising:
- a user's mobile device, in which a software application (APP) is stored and executable, said software application (APP) being configured to allow the registration of one or more household appliances, also through association with at least one user equipped with said user's mobile device;
- electronic processing means, remote from the at least one household appliance and the user's mobile device, operatively and communicatively connected to said user's mobile device, configured to:
(i) associate a plurality of users with a membership and/or subscription and with the related use of at least one household appliance associated with the membership and/or subscription;
(iii) set and manage a hierarchy of users, among the users belonging to said plurality of users, said hierarchy of users comprising at least:
- one "main user", which is the user, among said plurality of users, who activates the multi-user membership and/or subscription and provides for the related payments, and
- one or more further "associated users" enabled to use one or more household appliances, according to constraints defined by the main user, based on the membership of the main user, and upon registration by the main user;
wherein said software application (APP) is further configured to allow providing information to said remote servers regarding one or more memberships and/or subscriptions and regarding the users related to said one or more memberships and/or subscriptions.

14. A system according to claim 13, wherein said electronic processing means comprise one or more remote servers,
wherein said one or more remote servers consist of and/or comprise an "e-commerce server", and/or a "customer account management server" and/or a "billing server" configured to interoperate and interact also with said software application (APP),
and/or wherein said "customer account management server" comprises a Customer Relationship Management (CRM) server,
and/or wherein said "billing server" comprises a billing platform with a billing engine,
and/or wherein the system further comprises a platform, accessible via the Internet, which acts as a gateway for all the membership services and is configured to interact with the software application (APP),
wherein said platform accessible via the Internet provides the user with a single interface for the entire membership service, and/or wherein said platform accessible via the Internet directly provides "e-commerce server" functions and interoperates with other servers to provide, in a transparent manner for the user, the aforesaid customer account management and billing functions, which are involved in the "multi-user membership".

15. A system according to claim 14, configured to perform a method according to any one of claims 1-13.
